# EUROPEAN PATENT SPECIFICATION

(11) **EP 4 083 091 B1**
(45) Date of publication and mention of the grant of the patent: **14.08.2024**
(21) Application number: 20906200.9
(22) Date of filing: 21.12.2020
(51) Int. Cl.: H01M 10/0565, C08F 265/04, C08F 257/02, C08F 230/06, C08F 212/14, H01M 10/0525, C08F 265/08, C08L 25/06, C08L 51/00

(54) **POLYMER ELECTROLYTE, AND LITHIUM ION BATTERY COMPRISING SAME**
POLYMERELEKTROLYT UND LITHIUM-IONEN-BATTERIE DAMIT
ÉLECTROLYTE POLYMÈRE ET PILE AU LITHIUM-ION LE COMPRENANT

(30) Priority: 23.12.2019 CN 201911339978
(43) Date of publication of application: 02.11.2022
(73) Proprietor: Zhuhai CosMX Battery Co., Ltd., Zhuhai, Guangdong 519180 (CN)
(72) Inventor: TANG, Weichao, Zhuhai, Guangdong 519180 (CN); LI, Suli, Zhuhai, Guangdong 519180 (CN); ZHAO, Wei, Zhuhai, Guangdong 519180 (CN); YUAN, Hao, Zhuhai, Guangdong 519180 (CN); LI, Junyi, Zhuhai, Guangdong 519180 (CN); XU, Yanming, Zhuhai, Guangdong 519180 (CN)
(74) Representative: Elzaburu S.L.P.
(86) International application number: PCT/CN2020/138141
(87) International publication number: WO 2021/129583

(56) References cited:
- CN-A- 109 037 770
- CN-A- 109 037 770
- CN-A- 109 326 822
- CN-A- 109 575 187
- CN-A- 110 048 156
- CN-A- 111 138 596
- JP-A- H11 329 064
- PARK NATHANIEL H. ET AL: "Convergent Approach to Boronic Acid Functionalized Polycarbonates: Accessing New Dynamic Material Platforms", ACS MACRO LETTERS, vol. 6, no. 3, 27 February 2017 (2017-02-27), pages 252 - 256, XP093039073, ISSN: 2161-1653, DOI: 10.1021/acsmacrolett.6b00875

## Description

### TECHNICAL FIELD

The present invention belongs to the technical field of lithium-ion battery and, in particular, relates to a polymer electrolyte and a lithium-ion battery including the polymer electrolyte.

### BACKGROUND

Lithium-ion batteries are now widely used in the fields of power, digital, and energy storage, etc., but the lithium-ion batteries are prone to thermal runaway during use, leading to leakage or combustion of flammable and volatile electrolyte solutions, thereby resulting in safety problems.

In order to improve the safety problems of the lithium-ion batteries, there are mainly technical methods of PTC coating layer, thermal blocking separation film, thermal blocking tab, etc. in liquid state lithium-ion batteries, but the effect is limited and the safety problems of the lithium-ion batteries are not fundamentally improved. Solid state electrolytes and semi-solid state electrolytes are expected to fundamentally solve the safety problems of lithium-ion. At present, there are three main systems of solid state electrolytes, which are sulfide electrolytes, oxide electrolytes and polymer electrolytes. The sulfide electrolytes have problems of high requirements for environmental atmosphere, difficulty in batching, etc.; the oxide electrolytes have problems of poor processability, high interfacial impedance, etc.; and the polymer electrolytes have problems of low electrical conductivity at room temperature, low electrochemical window, etc. The semi-solid state electrolytes have a state between solid state and liquid state, which have the safety as the solid state electrolytes, and have a lithium-ion electrical conductivity similar with liquid state electrolytes. However, there are problems of poor uniformity, difficult processing, etc. of the semi-solid state electrolytes.

In order to improve the performances of the polymer electrolytes, Chinese invention patent application No. 201710386736.0 disclosed a gel electrolyte containing cyclic ethers. In this patent, a gel electrolyte with adjustable strength can be obtained. However, the structure of cyclic ethers is used in this system, which has poor high voltage resistance performance. In a lithium cobalt oxide and ternary system, the electrolyte is caused to oxidative decomposition and cannot be used in high energy density battery systems. Chinese invention patent application No. 201811419047.6 disclosed the preparation of a cross-linked polymer electrolyte and the preparation of a semi-solid state polymer electrolyte. In this patent, a cross-linked agent with alkenyl cyclic carbonate as both end groups is used, and the cross-linked polymer electrolyte is prepared using a free radical initiation. However, in this patent, the cross-linked polymer electrolyte needs to be prepared first, and then batteries are assembled, so there are problems such as complicated processing process, etc. Secondly, the cross-linked agent used in this patent is in a structure of dialkenyl cyclic boronate, the cost of this reagent is relatively high, and it is difficult to meet industrial production.

CN109037770 relates to a polymer electrolyte for a lithium battery including bis(vinyl) carbonate as crosslinker, polyethylene glycol methyl ether methacrylate, PVDF and methoxypolyethylene glycol borate.

CN109326822 describes a solid electrolyte including hexafluorobutyl acrylate, 2,2,3,3,4,4,4-heptafluoro-butyl methacrylate, polyethylene glycol methyl ether acrylate, polyethylene glycol methyl ether methacrylate, lithium bis(oxalate) borate (LiBOB) and vinylene carbonate.

### SUMMARY

The first object of the present invention is to provide a polymer electrolyte.

The second object of the present invention is to provide a preparation method of a polymer electrolyte.

The third object of the present invention is to provide a lithium-ion battery and a preparation method thereof.

The specific technical solutions of the present invention are described in the appended set of claims.

The first aspect of the present invention discloses a polymer electrolyte, and the polymer electrolyte at least contains one carbonate structure, one ester structure, one boron structure, and one fluorine structure; the carbonate structure, the ester structure, the boron structure, and the fluorine structure may be combined with each other to form different chain sections;
wherein the polymer electrolyte comprises a vinyl carbonate structure, a vinyl ester structure, a vinyl-containing boron-containing functional group structure, and a fluorine-containing functional group structure;
preferably, a unit mole of the polymer electrolyte contains 0.8-0.95 mole part of the carbonate structure and the ester structure, and 0.01-0.25 mole part of the boron structure and the fluorine structure;
preferably, the polymer electrolyte has a number average molecular weight of 500-300000.

Preferably, the polymer electrolyte has any one structure of the following formula (I), formula (II), or formula (III), wherein formula (I) is not according to the invention. 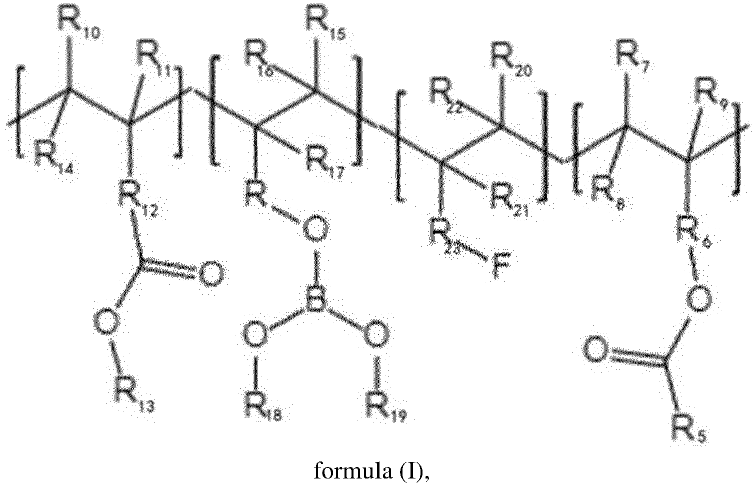 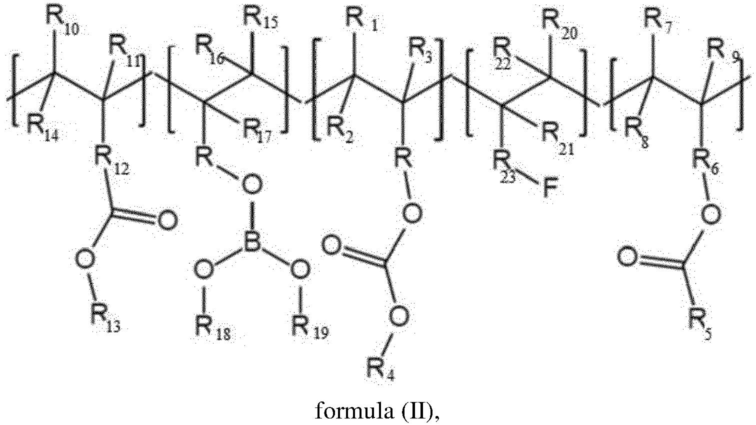 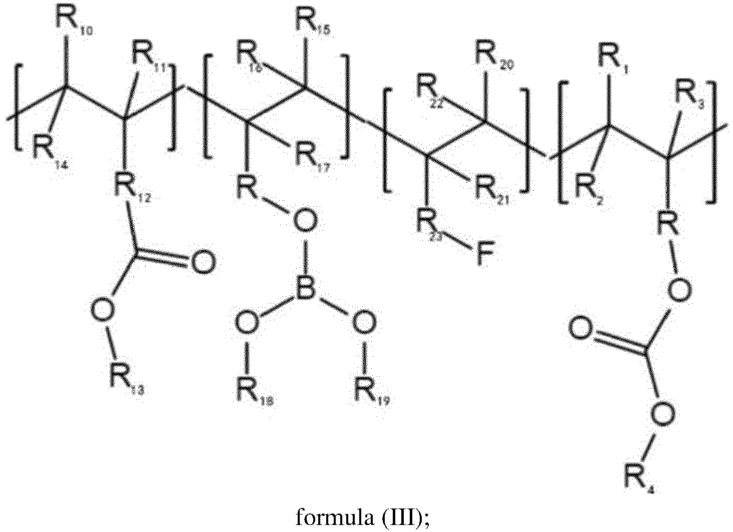 where R₁ to R₂₃ each is an organic functional group.

More preferably, the vinyl carbonate structure has a formula as follows:

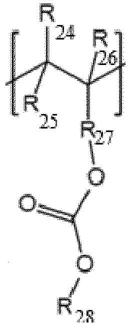

More preferably, the vinyl ester structure has a formula as follows:

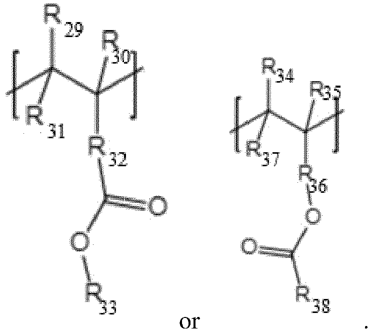

More preferably, the vinyl-containing boron-containing functional group structure has a structural formula as follows:

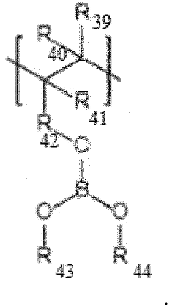

More preferably, the fluorine-containing functional group structure has a structural formula as follows:

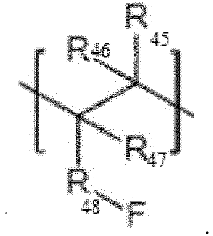

The second aspect of the present invention discloses a preparation method of a polymer electrolyte, including:
(1) dissolving a functional polymer with an organic solvent, and uniformly mixing to obtain an system A, where the functional polymer has a mass ratio of 0.2%-30% in the system A;
(2) uniformly mixing the system A, a lithium salt, and a functional additive to obtain a mixed solution;
(3) subjecting the mixed solution to in-situ polymerizing to obtain the polymer electrolyte.

Preferably, the organic solvent is vinyl carbonate or vinyl ester.

More preferably, the vinyl carbonate structure is 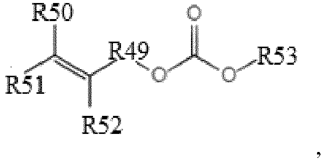 where R49, R50, R51, R52, R53 each is an organic functional group, and R49, R50, R51, R52, R53 may also be alone or be combined with each other to form a cyclic carbonate structure.

In some specific examples of the present invention, the vinyl carbonate is one or more of allyl methyl carbonate, vinyl ethylene carbonate, diallyl pyrocarbonate, diallyl carbonate, allyl phenyl carbonate, allyl diethylene glycol dicarbonate.

More preferably, the vinyl ester structure is 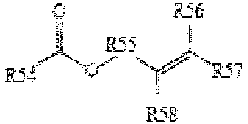 or 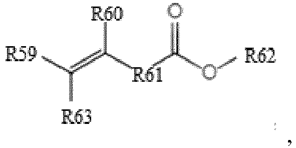 where R54, R55, R56, R57, R58 each is an organic functional group, and R54, R55, R56, R57, R58 may also be alone or be combined with each other to form a cyclic ester structure. R59, R60, R61, R62, R63 each is an organic functional group, and R59, R60, R61, R62, R63 may also be alone or be combined with each other to form a cyclic ester structure.

In some specific examples of the present invention, the vinyl ester is one or more of allyl phenoxyacetate, allyl acetoacetate, linalyl acetate, allyl heptanoate, itaconic anhydride, allyl hexanoate, diallyl phthalate, 2-methacrylic anhydride, allyl acetate, 4,4-dimethyl-2-vinyl-2-oxazolin-5-one, 2-methyl-2-propenyl acetate, 2-(trimethylsilylmethyl)allyl acetate, allyl trifluoroacetate, 3-acetoxy-1-propenylboronic acid pinacol ester, 2-methyl-2-propene-1,1-diol diacetate, allyl (triphenylphosphoranylidene) acetate, 1-ethyl-2-propenyl acetate, 2-(perfluorooctyl)ethyl methacrylate, butyl methacrylate, hydroxyethyl methacrylate, 4,4,4-trifluorocrotonate, 1H,1H-perfluoro-n-decyl acrylate, 2-methylene butyrolactone, dimethylaminoethyl acrylate, hexafluoroisopropyl methacrylate, 1H,1H-perfluorooctyl methacrylate, trifluoroethyl methacrylate, isooctyl acrylate, 4-hydroxybutyl acrylate, isocyanatoethyl methacrylate, methyl 2-fluoroacrylate, diethylaminoethyl methacrylate, methyl 2-(trifluoromethyl)acrylate, 2-methoxyethyl acrylate, maleic anhydride, isobutyl methacrylate, n-butyl acrylate, 2-cyclohexyl methacrylate, benzyl methacrylate, 2,2,3,3-tetrafluoropropyl methacrylate, etc.

Preferably, the functional polymer is a polymer that is resistant to high voltage, and is linear and soluble. This functional polymer is one or more of soluble polynitrile, soluble polyolefin, soluble polyester (including soluble polycarbonate, soluble polyborate), soluble fluorine-containing polymer, soluble silicone polymer, soluble polyphenylene sulfide, soluble sulfone polymer.

In some specific examples of the present invention, the soluble polynitrile is polyacrylonitrile, aromatic nitrile-based polymer, or nitrile copolymer.

In some specific examples of the present invention, the soluble polyolefin is polyparaphenylene ethylene, polystyrene, or olefin copolymer.

In some specific examples of the present invention, the soluble polyester is polymethyl methacrylate, polymethyl acrylate, or ester copolymer.

In some specific examples of the present invention, the soluble fluorine-containing polymer is polytetrafluoroethylene, polyvinylidene fluoride, or polyvinylidene fluoride-hexafluoropropylene.

Preferably, in the step (2), the lithium salt has a concentration of 0.005 mol/mL(0.5 mol/L)-0.004 mol/mL(4 mol/L) in the mixed solution.

The lithium salt contains one or more of fluorine element, oxygen element, chlorine element, arsenic element, boron element, sulfur element, phosphorus element, nitrogen element, and carbon element.

In some specific examples of the present invention, the lithium salt is one or more of lithium perchlorate (LiClO₄), lithium hexafluorophosphate (LiPF₆), lithium hexafluoroarsenate (LiAsF₆), lithium tetrafluoroborate (LiBF₄), lithium bisoxalate borate (LiBOB), lithium oxalate difluoroborate (LiDFOB), lithium bisfluorosulfonimide (LiFSI), lithium bistrifluoromethanesulfonimide (LiTFSI), lithium trifluoromethanesulfonate (LiCF₃SO₃), lithium bis(malonato)borate (LiBMB), lithium malonate oxalate borate (LiMOB), lithium hexafluoroantimonate (LiSbF₆), lithium difluorophosphate (LiPF₂O₂), lithium 4,5-dicyano-2-trifluoromethyl imidazole (LiDTI), lithium bis(trifluoromethylsulfonyl)imide (LiN(SO₂CF₃)₂), LiN(SO₂C₂F₅)₂, LiC(SO₂CF₃)₃, and LiN(SO₂F)₂.

Preferably, the functional additive has a content of 0.01%-20% in the electrolyte.

Preferably, the functional additive is one or more of a reagent of a vinyl boron structure type and a reagent of a vinyl fluorine structure type.

In some preferred examples of the present invention, the reagent of the vinyl boron structure type has a structural formula of 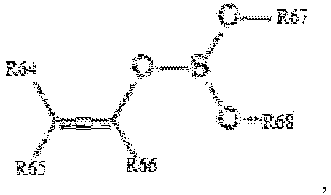 where R64, R65, R66, R67 or R68 each is an organic functional group, and R64, R65, R66, R66, R67 or R68 may also be alone or be combined with each other to form a cyclic structure. The reagent of the vinyl boron structure type is preferably one or more of boron allyloxide, vinylboronic acid pinacol ester, 2-ethoxycarbonylvinylboronic acid pinacol ester, isopropenylboronic acid MIDA ester, trans-2-[3,5-bis(trifluoromethyl)phenyl]vinylboronic acid pinacol ester, (E)-1-ethoxyethene-2-boronic acid pinacol ester, isopropenylboronic acid pinacol ester, 4-trifluoromethyl-trans-beta-styrylboronic acid pinacol ester, 2,2-dimethylethenylboronic acid, 1-(4-fluorophenyl)vinylboronic acid pinacol ester, 1-(trifluoromethyl)vinylboronic acid hexylene glycol ester, 1-phenylvinylboronic acid pinacol ester, 1-phenylvinylboronic acid, 4,4,6-trimethyl-2-vinyl-1,3,2-dioxaborinane, trans-beta-styrylboronic acid, 2-cyclohexylethenylboronic acid, 2,2-dimethylethenylboronic acid.

In some preferred examples of the present invention, the reagent of the vinyl fluorine structure type has a structural formula of 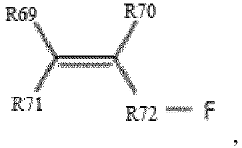 where R69, R70, R71, R72 each is an organic functional group, and R69, R70, R71, R72 may also be alone or be combined with each other to form a cyclic structure. The reagent of the vinyl fluorine structure type is preferably one or more of methyl 2-fluoroacrylate, perfluoroethyl vinyl ether, 4,5,5-trifluoropent-4-enoic acid, trifluoromethyl trifluorovinyl ether, perfluoroallylbenzene, phenyl trifluorovinyl ether, etc.

The third aspect of the present invention discloses a polymer electrolyte obtained by the method described above.

The fourth aspect of the present invention discloses a lithium-ion battery, including the polymer electrolyte disclosed in the first aspect and the third aspect described above.

The fifth aspect of the present invention discloses a preparation method of a lithium-ion battery, including:
S1: dissolving a functional polymer with an organic solvent, and uniformly mixing to obtain an system A, where the mass ratio of the functional polymer in the system A is 0.2 %-30%;
S2: uniformly mixing the system A, a lithium salt, and a functional additive to obtain a mixed solution;
S3: adding the mixed solution into a battery cell, and performing in-situ polymerizing and bonding after hot pressing treatment at 60 °C-90 °C to obtain a lithium-ion battery.

Preferably, the S3 includes:
S31: injecting the mixed solution into the battery cell, and the mixed solution fully impregnates a positive electrode sheet, a negative electrode sheet and a position between a positive electrode and a negative electrode;
S32: encapsulating the battery cell;
S33: subjecting the battery cell to the hot pressing treatment and then the in-situ polymerizing and bonding.
S34: encapsulating again to obtain the lithium-ion battery.

Further, a positive electrode active material in the positive electrode sheet in the S31 contains one or more of lithium element, iron element, phosphorus element, cobalt element, manganese element, nickel element, and aluminum element, where the positive electrode active material is doped and wrapped by one or more elements of aluminum, magnesium, titanium, zirconium, nickel, manganese, yttrium, lanthanum, and strontium, etc. More preferably, the positive electrode sheet is doped and wrapped by one or more of lithium iron phosphate, lithium cobalt oxide, nickel-cobalt-manganese ternary battery material, lithium manganate, nickel-cobalt-aluminum ternary battery material, lithium-rich manganese-based material.

Further, an intermediate separation layer in the S31 has a thickness of 3 µm-100 µm, and the material of the intermediate separation layer is one or more of polymer material separation film, oxide electrolyte, polymer electrolyte, sulfide electrolyte.

Further, a negative electrode sheet active material in the S31 is one or more of carbon material, metal bismuth, lithium metal, nitride, magnesium-based alloy, indium-based alloy, boron-based material, silicon-based material, tin-based material, antimony-based alloy, gallium-based alloy, germanium-based alloy, aluminum-based alloy, lead-based alloy, zinc-based alloy, titanium oxide, nano transition metal oxide MO, iron oxide, chromium oxide, molybdenum oxide, phosphide; where M is one or more of Co, Ni, Cu, or Fe.

Further, the lithium-ion battery obtained by the in-situ polymerizing and bonding after the hot pressing treatment of the battery cell in the S33 is a semi-solid state lithium-ion battery.

The polymer electrolyte in the lithium-ion battery completely distinguishes a liquid electrolyte, which has the properties of a semi-solid state polymer electrolyte, and its number average molecular weight is in the range of 500-300000. The application of the polymer electrolyte in the battery should satisfy the following conditions: high voltage resistance, good contact with the positive electrode and the negative electrode, high electrical conductivity, and strong workability. Conventional semi-solid state gel electrolytes are mainly composed of polymethyl methacrylate, polyacrylonitrile, polyvinylidene fluoride, poly(vinylidene fluoride-hexafluoropropylene), etc. They are all made to a linear or a cross-linked polymer film first, and then combined fully with an inorganic filler and an electrolyte solution to prepare a gel electrolyte. However, the gel electrolyte has difficulties such as long processing flow, difficult to control the uniformity of the gel electrolyte product, difficult to control the liquid retention rate of the gel electrolyte, etc.

Based on the conformity with common sense in the art, the preferred conditions described-above may be arbitrarily combined without exceeding the concept and protection scope of the present invention.

The present invention distinguishes conventional semi-solid state gel electrolytes, mainly using a vinyl boron fluorine structure, a vinyl boron structure, a vinyl fluorine structure, a vinyl polyether structure, a vinyl carbonate structure, a vinyl sulfone structure, a vinyl benzene structure, a vinyl phosphorus structure, a vinyl nitrogen structure as a monomer. A small amount of an organic solvent is selected to dissolve a lithium salt, an encapsulated lithium-ion battery cell is injected with a liquid, and after injecting, the mixed solution fully impregnates the positive and negative electrode sheets, the high temperature in-situ solidification reaction is performed to prepare an in-situ semi-solid state lithium-ion battery.

Compared with the prior art, the present invention has the following advantageous effects: 1. the polymer electrolyte in the present invention contains a borate structure, which has good electrochemical stability and can effectively improve the electrochemical stability of the vinyl polyether structure, thereby improving the high voltage resistance performance of the polymer electrolyte; 2. the polymer electrolyte in the present invention contains a fluorine-containing structure, which has good chemical stability and needs high energy to break its chemical bonds, and can improve the electrochemical stability of the polymer electrolyte; 3. the polymer electrolyte in the present invention contains a carbonate structure and a sulfone structure, which has better affinity with anions of the lithium salt and relatively high electrical conductivity, and improves the performance of the semi-solid state battery; 4. the monomer of the polymer electrolyte in the present invention is a vinyl boron fluorine structure, a vinyl boron structure, a vinyl fluorine structure, a vinyl polyether structure and a vinyl carbonate structure, and the boron structure, the fluorine structure, the carbonate and the ether structure have good dissociation effect with anions of the lithium salt, thereby promoting the dissociation of the lithium salt and improving the conductance of lithium ions of the polymer electrolyte; 5. the polymer electrolyte in the present invention has good impregnation of the positive and negative electrodes, forms a complete lithium ion conducting channel inside the positive and negative electrode sheets mainly using in-situ polymerizing method, and make the semi-solid state battery has good performance; 6. the reaction system for preparing the lithium-ion battery in the present invention does not require adding of other initiators, which can effectively reduce the generation of side reactions during battery cycle process; 7. the semi-solid state battery prepared by the present invention is based on the existing lithium-ion battery processing technology, has good processing performance and electrochemical performance, and has certain application prospects.

### BRIEF DESCRIPTION OF DRAWINGS

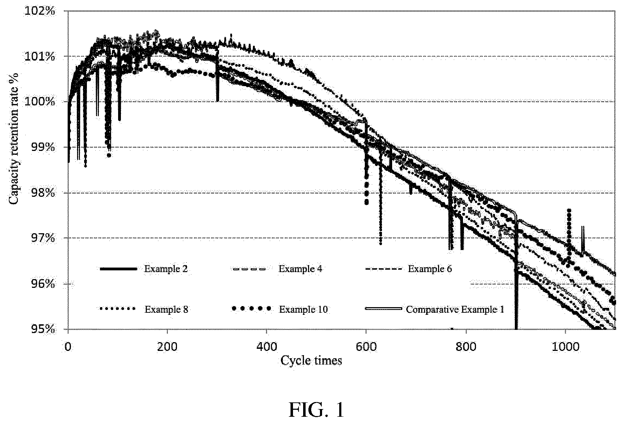

FIG. 1 is a diagram of a lithium-ion battery in an example of the present invention to undergo a charge-discharge cycle test.

### DESCRIPTION OF EMBODIMENTS

The technical solutions of the present invention will be described in detail below combined with the drawings and examples, but the present invention is not limited in the scope of the examples.

The experimental methods for which specific conditions are not indicated in the following examples are selected according to conventional methods and conditions, or according to the trade descriptions. The reagents and materials used in the present invention are commercially available.

### Example 1

The present example discloses a preparation method of a polymer electrolyte, including:
(1) based on parts by weight, adding 20 parts of polymethyl methacrylate, and 10 parts of polymethyl acrylate into a reagent consisting of 5 parts of allyl methyl carbonate, 25 parts of vinyl ethylene carbonate, 5 parts of allyl diethylene glycol dicarbonate, 3 parts of allyl heptanoate, 4 parts of itaconic anhydride, 8 parts of allyl hexanoate, 3 parts of diallyl phthalate, 6 parts of 2-methacrylic anhydride, 6 parts of allyl acetate, 2 parts of 4,4-dimethyl-2-vinyl-2-oxazolin-5-one, and 3 parts of 2-methyl-2-propenyl acetate, and uniformly mixing to obtain a system A, where the mass ratio of the functional polymer (i.e., 20 parts of polymethyl methacrylate and 10 parts of polymethyl acrylate) in the system A is 30%;
(2) uniformly mixing 100 parts of the system A and a functional additive of 0.01 part of boron allyloxide, then adding lithium perchlorate (LiClO₄) and lithium hexafluorophosphate (LiPF₆) (with a mass ratio of 1:5) until the lithium salts are fully dissolved and the lithium salts have a concentration of 0.004 mol/mL(4 mol/L) in the mixed solution;
(3) subjecting the mixed solution to in-situ polymerizing at 60 °C to obtain the polymer electrolyte.

### Example 2

The present example discloses a preparation method of a lithium-ion battery, including:
S1: based on parts by weight, adding 0.01 part of polystyrene into a reagent consisting of 2 parts of diallyl carbonate, 1 part of allyl trifluoroacetate, 2 parts of allyl acetoacetate, and uniformly mixing to obtain a system A, where a mass ratio of the functional polymer (i.e., 0.01 part of polystyrene) in the system A is 0.2%;
S2: uniformly mixing 50 parts of the system A, 6 parts of allylpentafluorobenzene, and 6.5 parts of 1,2,2-trifluorovinyltriphenylsilane, adding lithium hexafluorophosphate (LiPF₆), lithium hexafluoroarsenate (LiAsF₆), lithium tetrafluoroborate (LiBF₄), lithium bisoxalate borate (LiBOB) (with the mass ratio of 5:2:1:1), until the lithium salts are fully dissolved and the concentration of the lithium salts in the mixed solution is 0.0011 mol/mL(1.1 mol/L);
S3: adding the mixed solution into a battery cell, and performing hot pressing treatment at 80 °C and then in-situ polymerizing and bonding to obtain a lithium-ion battery.

Specifically, the S3 includes:
S31: injecting the mixed solution into the battery cell, and the mixed solution fully impregnates a positive electrode sheet, a negative electrode sheet and a position between a positive electrode and a negative electrode;
S32: encapsulating the battery cell;
S33: subjecting the battery cell to the hot pressing treatment at 80 °C and then the in-situ polymerizing and bonding.
S34: encapsulating again to obtain the lithium-ion battery.

### Example 3

The present example discloses a preparation method of a polymer electrolyte, including:
(1) adding 2 parts of polyacrylonitrile, 10 parts of polymethyl methacrylate, 6 parts of poly(vinyl acetate), 2 parts of polyvinylidene fluoride-hexafluoropropylene into a reagent consisting of 2 parts of diallyl pyrocarbonate, 10 parts of vinyl ethylene carbonate, 4 parts of allyl phenyl carbonate, 20 parts of 2-methylene butyrolactone, 20 parts of dimethylaminoethyl acrylate, 4 parts of hexafluoroisopropyl methacrylate, 1 part of 1H,1H-perfluorooctyl methacrylate, 5 parts of trifluoroethyl methacrylate, 4 parts of isooctyl acrylate, and 10 parts of 4-hydroxybutyl acrylate, uniformly mixing to obtain a system A, where the mass ratio of the functional polymer (i.e., 2 parts of polyacrylonitrile, 10 parts of polymethyl methacrylate, 6 parts of poly(vinyl acetate), and 2 parts of polyvinylidene fluoride-hexafluoropropylene) in the system A is 20%;
(2) uniformly mixing 90 parts of the system A and a functional additive of 2 parts of trans-3-phenylpropen-1-yl-boronic acid, 3 parts of 4-trifluoromethyl-trans-beta-styrylboronic acid pinacol ester, and 5 parts of 2,2-dimethylethenylboronic acid, adding lithium hexafluorophosphate (LiPF₆), lithium oxalate difluoroborate (LiDFOB), lithium bisfluorosulfonimide (LiFSI) (with a mass ratio of 4:1:2), until the lithium salts are fully dissolved and the concentration of the lithium salts in the mixed solution is 0.0005 mol/mL(0.5 mol/L);
(3) subjecting the mixed solution to in-situ polymerizing at 70 °C to obtain the polymer electrolyte.

### Example 4

The present example discloses a preparation method of a lithium-ion battery, including:
S1: based on parts by weight, adding 0.3 part of polymethyl acrylate, 0.2 part of polyvinylidene fluoride into a reagent consisting of 1 part of 3-acetoxy-1-propenylboronic acid pinacol ester, 2 parts of 2-methyl-2-propene-1,1-diol diacetate, 1 part of allyl (triphenylphosphoranylidene) acetate, 2 parts of 1-ethyl-2-propenyl acetate, 2.5 parts of vinyl ethylene carbonate, 1 part of allyl phenyl carbonate, and uniformly mixing to obtain a system A, where the mass ratio of the functional polymer (i.e., 0.3 part of polymethyl acrylate and 0.2 part of polyvinylidene fluoride) in the system A is 0.5%;
S2: uniformly mixing 50 parts of the system A, 0.2 part of 4-vinylphenylboronic acid, 0.2 part of isopropenylboronic acid MIDA ester, and 0.11 part of trans-2-[3,5-bis(trifluoromethyl)phenyl]vinylboronic acid pinacol ester, adding lithium bistrifluoromethanesulfonimide (LiTFSI), lithium trifluoromethanesulfonate (LiCF₃SO₃), lithium bis(malonato)borate (LiBMB), and lithium hexafluorophosphate (LiPF₆) (with a mass ratio of 3:1:1:4), until the lithium salts are fully dissolved and the concentration of the lithium salts in the mixed solution is 0.0012 mol/mL(1.2 mol/L);
S3: adding the mixed solution into a battery cell, and performing hot pressing treatment at 65 °C, and then in-situ polymerizing and bonding to obtain a lithium-ion battery.

Specifically, the S3 includes:
S31: injecting the mixed solution into the battery cell, and the mixed solution fully impregnates a positive electrode sheet, a negative electrode sheet and a position between a positive electrode and a negative electrode;
S32: encapsulating the battery cell;
S33: subjecting the battery cell to the hot pressing treatment at 65 °C and then the in-situ polymerizing and bonding.
S34: encapsulating again to obtain the lithium-ion battery.

### Example 5

The present example discloses a preparation method of a polymer electrolyte, including:
(1) adding 0.5 part of polymethyl methacrylate, 0.5 part of polyacrylonitrile into a reagent consisting of 1 part of methyl 2-(trifluoromethyl)acrylate, 1 part of 2-methoxyethyl acrylate, 1 part of maleic anhydride, 2 parts of isobutyl methacrylate, 2 parts of n-butyl acrylate, 4 parts of 2-cyclohexyl methacrylate, 1 part of benzyl methacrylate, 1 part of 2,2,3,3-tetrafluoropropyl methacrylate, 3 parts of vinyl ethylene carbonate, and 3 parts of diallyl carbonate, and uniformly mixing to obtain an system A, where the mass ratio of the functional polymer (i.e., 0.5 part of polymethyl methacrylate and 0.5 part of polyacrylonitrile) in the system A is 5%;
(2) uniformly mixing 100 parts of the system A and a functional additive of 0.1 part of perfluoroallylbenzene, 0.2 part of phenyl trifluorovinyl ether, 0.22 part of 1-phenylvinylboronic acid, adding lithium hexafluorophosphate (LiPF₆), lithium difluorophosphate (LiPF₂O₂), lithium 4,5-dicyano-2-trifluoromethyl imidazole (LiDTI) (with a mass ratio of 5:1:2), until the lithium salts are fully dissolved and the concentration of the lithium salts in the mixed solution is 0.002 mol/mL(2 mol/L);
(3) subjecting the mixed solution to in-situ polymerizing at 85 °C to obtain the polymer electrolyte.

### Example 6

The present example discloses a preparation method of a lithium-ion battery, including:
S1: based on parts by weight, adding 0.5 part of polystyrene, and 2.5 parts of polymethyl acrylate into a reagent consisting of 1 part of diallyl pyrocarbonate, 4 parts of vinyl ethylene carbonate, 4 parts of diallyl carbonate, 3 parts of 2-methoxyethyl acrylate, 3 parts of maleic anhydride, and 2 parts of isobutyl methacrylate, and uniformly mixing to obtain a system A, where the mass ratio of the functional polymer (i.e., 0.5 part of polystyrene and 2.5 parts of polymethyl acrylate) in the system A is 15%;
S2: uniformly mixing 35 parts of the system A, 5 parts of (E)-1-ethoxyethene-2-boronic acid pinacol ester and 10 parts of isopropenylboronic acid pinacol ester, adding lithium hexafluorophosphate (LiPF₆), lithium malonate oxalate borate (LiMOB), lithium hexafluoroantimonate (LiSbF₆), lithium 4,5-dicyano-2-trifluoromethyl imidazole (LiDTI), lithium bis(trifluoromethylsulfonyl)imide (LiN(SO₂CF₃)₂) (with a mass ratio of 3:1:2:1:1), until the lithium salts are fully dissolved and the concentration of the lithium salts in the mixed solution is 0.001 mol/mL(1.0 mol/L);
S3: adding the mixed solution into a battery cell, and performing hot pressing treatment at 90 °C and then in-situ polymerizing and bonding to obtain a lithium-ion battery.

Specifically, the S3 includes:
S31: injecting the mixed solution into the battery cell, and the mixed solution fully impregnates a positive electrode sheet, a negative electrode sheet and a position between a positive electrode and a negative electrode;
S32: encapsulating the battery cell;
S33: subjecting the battery cell to the hot pressing treatment at 90 °C and then in-situ polymerizing and bonding.
S34: encapsulating again to obtain the lithium-ion battery.

### Example 7

The present example discloses a preparation method of a polymer electrolyte, including:
(1) based on parts by weight, adding 0.2 part of aromatic nitrile-based polymer or nitrile copolymer into a reagent consisting of 4 parts of vinyl ethylene carbonate, 4 parts of diallyl carbonate, 4 parts of butyl methacrylate, 4 parts of hydroxyethyl methacrylate, 2 parts of 4,4,4-trifluorocrotonate, 2 parts of 1H,1H-perfluoro-n-decyl acrylate, and uniformly mixing to obtain a system A, where the mass ratio of the functional polymer (i.e., 0.2 part of aromatic nitrile-based polymer or nitrile copolymer) in the system A is 0.99%;
(2) uniformly mixing 44 parts of the system A and a functional additive of 2 parts of vinylboronic acid pinacol ester, 2 parts of 2-ethoxycarbonylvinylboronic acid pinacol ester, 1 part of 1-(trifluoromethyl)vinylboronic acid hexylene glycol ester, and 1 part of 1-phenylvinylboronic acid pinacol ester, adding lithium hexafluorophosphate (LiPF₆), and lithium malonate oxalate borate (LiMOB) (with a mass ratio of 3:1), until the lithium salts are fully dissolved and the concentration of the lithium salts in the mixed solution is 0.003 mol/mL(3 mol/L);
(3) subjecting the mixed solution to in-situ polymerizing at 70 °C to obtain the polymer electrolyte.

### Example 8

The present example discloses a preparation method of a lithium-ion battery, including:
S1: based on parts by weight, adding 4.5 parts of polymethyl methacrylate, and 0.5 part of polyvinylidene fluoride-hexafluoropropylene into a reagent consisting of 15 parts of allyl methyl carbonate, 5 parts of vinyl ethylene carbonate, 10 parts of 2-methyl-2-propenyl acetate, 8 parts of allyl trifluoroacetate, and 7 parts of n-butyl acrylate, and uniformly mixing to obtain a system A, where the mass ratio of the functional polymer (i.e., 4.5 parts of polymethyl methacrylate and 0.5 part of polyvinylidene fluoride-hexafluoropropylene) in the system A is 10%;
S2: uniformly mixing 47.5 parts of the system A, 2 parts of 1-(4-fluorophenyl)vinylboronic acid pinacol ester, 1 part of 4,4,6-trimethyl-2-vinyl-1,3,2-dioxaborinane, 1 part of perfluoroethyl vinyl ether and 1 part of 4,5,5-trifluoropent-4-enoic acid, adding lithium hexafluorophosphate (LiPF₆), lithium bistrifluoromethanesulfonimide (LiTFSI), lithium bis(trifluoromethylsulfonyl)imide (with a mass ratio of 4:1:2), until the lithium salts are fully dissolved and the concentration of the lithium salts in the mixed solution is 0.0015 mol/L(1.5 mol/L);
S3: adding the mixed solution into a battery cell, and performing hot pressing treatment at 75 °C and then in-situ polymerizing and bonding to obtain a lithium-ion battery.

Specifically, the S3 includes:
S31: injecting the mixed solution into the battery cell, and the mixed solution fully impregnates a positive electrode sheet, a negative electrode sheet and a position between a positive electrode and a negative electrode;
S32: encapsulating the battery cell;
S33: subjecting the battery cell to the hot pressing treatment at 75 °C and then the in-situ polymerizing and bonding.
S34: encapsulating again to obtain the lithium-ion battery.

### Example 9

The present example discloses a preparation method of a polymer electrolyte, including:
(1) based on parts by weight, adding 1.5 part of polymethyl acrylate into a reagent consisting of 10 parts of allyl methyl carbonate, 5 parts of vinyl ethylene carbonate, 4 parts of vinyl ethylene carbonate, 3 parts of allyl acetoacetate, 6 parts of allyl hexanoate, 7 parts of 2-methyl-2-propenyl acetate, 5 parts of butyl methacrylate, and 8.5 parts of 2-methylene butyrolactone, and uniformly mixing to obtain a system A, where the mass ratio of the functional polymer (i.e., 1.5 part of polymethyl acrylate) in the system A is 3*%*;
(2) uniformly mixing 40.5 parts of the system A and a functional additive of 1.5 part of boron allyloxide, 1.5 part of 1-(trifluoromethyl)vinylboronic acid hexylene glycol ester, 1.5 part of trifluoromethyl trifluorovinyl ether, adding lithium hexafluorophosphate (LiPF₆), lithium bisoxalate borate (LiBOB), and lithium trifluoromethanesulfonate (LiCF₃SO₃) (with a mass ratio of 4:1:2), until the lithium salts are fully dissolved and the concentration of the lithium salts in the mixed solution is 0.002 mol/mL(2 mol/L);
(3) subjecting the mixed solution to in-situ polymerizing at 80 °C to obtain the polymer electrolyte.

### Example 10

The present example discloses a preparation method of a lithium-ion battery, including:
S1: based on parts by weight, adding 1 part of aromatic nitrile-based polymer or nitrile copolymer, and 5 parts of polymethyl methacrylate into a reagent consisting of 4 parts of vinyl ethylene carbonate, 6 parts of diallyl carbonate, 9 parts of allyl diethylene glycol dicarbonate, 7 parts of 2-methacrylic anhydride, 4 parts of 2-methyl-2-propenyl acetate, 4 parts of allyl trifluoroacetate, 5 parts of butyl methacrylate, and 5 parts of 2-methylene butyrolactone, and uniformly mixing to obtain a system A, where the mass ratio of the functional polymer (i.e., 1 part of aromatic nitrile-based polymer or nitrile copolymer) in the system A is 12%;
S2: uniformly mixing 46.5 parts of the system A, 0.2 part of isopropenylboronic acid MIDA ester, 0.9 part of (E)-1-ethoxyethene-2-boronic acid pinacol ester, 0.4 part of 1-phenylvinylboronic acid, 0.5 part of methyl 2-fluoroacrylate and 1.5 part of 4,5,5-trifluoropent-4-enoic acid, then adding lithium perchlorate (LiClO₄), lithium hexafluorophosphate (LiPF₆), lithium bis(malonato)borate (LiBMB), and lithium malonate oxalate borate (LiMOB) (with a mass ratio of 4:1:2:1), until the lithium salts are fully dissolved and the concentration of the lithium salts in the mixed solution is 0.0016 mol/mL(1.6 mol/L);
S3: adding the mixed solution into a battery cell, and performing hot pressing treatment at 90 °C and then in-situ polymerizing and bonding to obtain a lithium-ion battery.

Specifically, the S3 includes:
S31: injecting the mixed solution into the battery cell, and the mixed solution fully impregnates a positive electrode sheet, a negative electrode sheet and a position between a positive electrode and a negative electrode;
S32: encapsulating the battery cell;
S33: subjecting the battery cell to the hot pressing treatment at 90 °C and then the in-situ polymerizing and bonding.
S34: encapsulating again to obtain the lithium-ion battery.

### Comparative Example 1

A preparation method of a lithium-ion battery disclosed in Comparative Example 1 of the present invention includes the following steps: uniformly mixing ethylene carbonate (EC), diethyl carbonate (DEC), and propylene carbonate (PC) in a mass ratio of 35:55:10 to obtain a non-aqueous solvent, then adding a certain amount of lithium hexafluorophosphate (LiPF₆), lithium bisoxalate borate (LiBOB), lithium trifluoromethanesulfonate (LiCF₃SO₃) (with a mass ratio of 4:1:2) into the mixed solution according to the total mass of the electrolyte solution until the lithium salts are fully dissolved and the concentration of the lithium salts in the mixed solution is 0.002 mol/mL(2 mol/L) so as to obtain a liquid state electrolyte solution.

A positive electrode sheet, a separation film, and a negative electrode sheet are assembled in sequence, the electrolyte solution prepared above is injected into a dried battery, and a lithium-ion battery of Comparative Example 1 is obtained through processes of encapsulation, quiescence, formation, etc.

### Experimental data

1. The electrical conductivity performances of the electrolytes in respective examples were tested, and the results are shown as Table 1.

**Table 1**

| **Sample number** | **Electrical conductivity/(mS/cm)** |
|---|---|
| Example 1 | 3.51 |
| Example 2 | 5.62 |
| Example 3 | 3.21 |
| Example 4 | 4.83 |
| Example 5 | 5.12 |
| Example 6 | 4.62 |
| Example 7 | 4.17 |
| Example 8 | 3.28 |
| Example 9 | 5.56 |
| Example 10 | 5.36 |
| Comparative Example 1 | 6.23 |

The electrical conductivity range of the examples of the present invention is between 3.21-5.56 mS/cm, and the electrical conductivity of the comparative example is 6.23 mS/cm. The electrical conductivity of the examples of the present invention is slightly lower than that of the liquid state electrolyte solution, but higher than 1.0 mS/cm, which can meet the application requirements.

### 2. Charge-discharge of the lithium-ion battery

The lithium-ion batteries prepared in Examples 2, 4, 6, 8, 10 and Comparative Example 1 were subjected to a charge-discharge cycle test, and the results are shown as FIG. 1. The test conditions were 25 °C, 50% humidity, and 1C/1C charge-discharge. A table made by the corresponding numerical points in FIG. 1 is shown as Table 2.

**Table 2**

| **Example and Comparative Example** | **Capacity retention rate (*%*) for 400 cycles** | **Capacity retention rate (*%*) for 800 cycles** | **Capacity retention rate (*%*) for 1000 cycles** |
|---|---|---|---|
| Comparative Example 1 | 100.4 | 98.1 | 96.2 |
| Example 2 | 100.3 | 97.4 | 95.6 |
| Example 4 | 100.4 | 97.7 | 95.8 |
| Example 6 | 100.8 | 97.5 | 96.2 |
| Example 8 | 100.6 | 97.8 | 95.7 |
| Example 10 | 100.4 | 97.9 | 96.6 |

It can be seen from FIG. 1 that the performance of the lithium-ion batteries prepared by the method disclosed in the present invention is close to the performance of the lithium-ion battery prepared by Comparative Example 1, which can meet the application requirements.

### 3. Safety performance of the lithium-ion battery

The lithium-ion batteries prepared in Examples 2, 4, 6, 8, 10 and Comparative Example 1 were fully charged (fully charged battery cells), and then subjected to puncture, extrusion and drop tests. The results are shown as Table 3.

**Table 3**

| **Sample number** | **Puncture** | **Extrusion** | **Drop** |
|---|---|---|---|
| Example 2 | Pass (pass rate 98%) | Pass (pass rate 98%) | Pass (pass rate 98%) |
| Example 4 | Pass (pass rate 97%) | Pass (pass rate 97%) | Pass (pass rate 99%) |
| Example 6 | Pass (pass rate 99%) | Pass (pass rate 98%) | Pass (pass rate 97%) |
| Example 8 | Pass (pass rate 98%) | Pass (pass rate 97%) | Pass (pass rate 97%) |
| Example 10 | Pass (pass rate 97%) | Pass (pass rate 99%) | Pass (pass rate 98%) |
| Comparative Example 1 | Pass (pass rate 16%) | Pass (pass rate 22%) | Pass (pass rate 17%) |

From the data in the above table, the results indicate that:
the puncture, extrusion, and drop safety tests of lithium batteries can be passed in Examples 2, 4, 6, 8 under the conditions, effectively improving the safety performance of the lithium-ion batteries. Comparative Example 1 has a relatively low pass rate.

Based on the above experimental data, it is shown that the polymer electrolyte prepared in the present invention can effectively improve the safety of lithium-ion batteries.

### 4. Internal resistance and voltage data of the lithium-ion battery

A ternary material was used as a positive electrode in Example 2, Example 4, Example 6, Example 8, Example 10, and Comparative Example 1 to prepare lithium-ion batteries, and average voltage and lithium-ion battery internal resistance tests were performed on the lithium-ion batteries. The results are shown as Table 4.

**Table 4**

| **Sample number** | **Average voltage of lithium battery** | **Internal resistance of lithium-ion battery** |
|---|---|---|
| Example 2 | 4.2013 V | 15.08 mΩ |
| Example 4 | 4.2011 V | 14.81 mΩ |
| Example 6 | 4.2009 V | 14.66 mΩ |
| Example 8 | 4.2008 V | 15.32 mΩ |
| Example 10 | 4.2012 V | 14.24 mΩ |
| Comparative Example 1 | 4.2010 V | 12.23 mΩ |

The cationic polymerization method was adopted in Example 2, Example 4, Example 6, Example 8, Example 10 and used in the semi-solid state lithium-ion batteries. Compared with Comparative Example 1, it can be known from the data in Table 3 that the lithium-ion batteries prepared in Example 2, Example 4, Example 6, Example 8, Example 10 and Comparative Example 1, after being sorted, have the voltage and internal resistance within a normal range, which can meet the application requirements.

The above examples are preferred embodiments of the present invention, but the embodiments of the present invention are not limited by the above examples.

## Claims

1. A polymer electrolyte, wherein the polymer electrolyte at least contains one carbonate structure, one ester structure, one boron structure, and one fluorine structure; the carbonate structure, the ester structure, the boron structure, and the fluorine structure can be combined with each other to form different chain sections;
preferably, a unit mole of the polymer electrolyte contains 0.8-0.95 mole part of the carbonate structure and the ester structure, and 0.01-0.25 mole part of the boron structure and the fluorine structure;
preferably, the polymer electrolyte has a number average molecular weight of 500-300000;
wherein the polymer electrolyte comprises a vinyl carbonate structure, a vinyl ester structure, a vinyl-containing boron-containing functional group structure, and a fluorine-containing functional group structure.

2. The polymer electrolyte according to claim 1, wherein the polymer electrolyte has any one structure of the following formula (I), or formula (II): 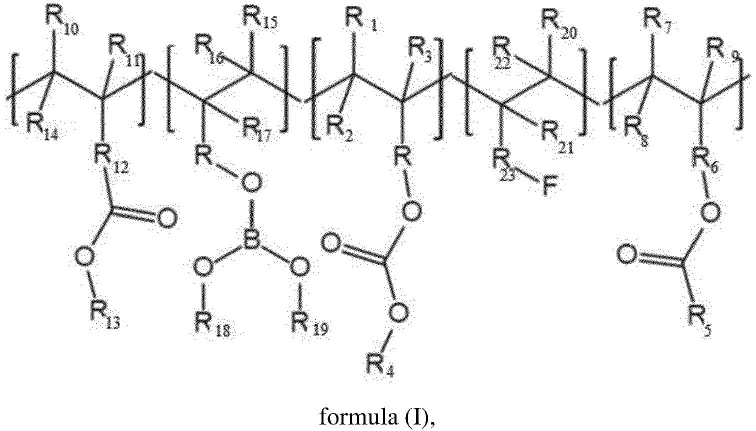 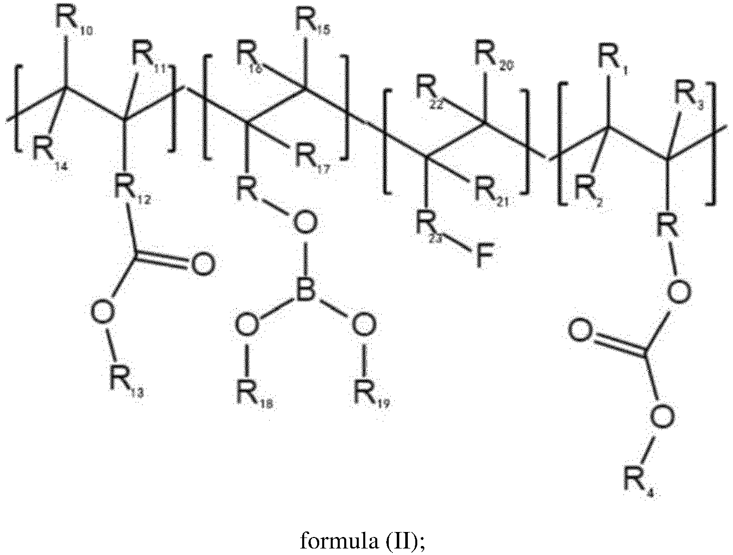 wherein R₁ to R₂₃ each is an organic functional group.

3. The polymer electrolyte according to claim 1, wherein the vinyl carbonate structure has a formula as follows:

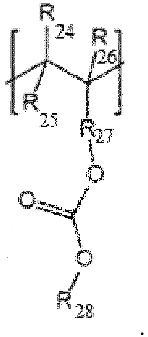

4. The polymer electrolyte according to claim 1, wherein the vinyl ester structure has a formula as follows:

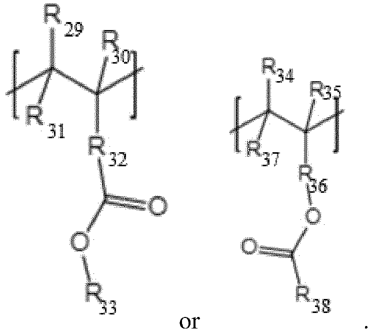

5. The polymer electrolyte according to claim 1, wherein the vinyl-containing boron-containing functional group structure has a structural formula as follows:

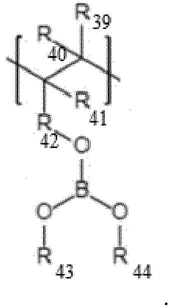

6. The polymer electrolyte according to claim 1, wherein the fluorine-containing functional group structure has a structural formula as follows:

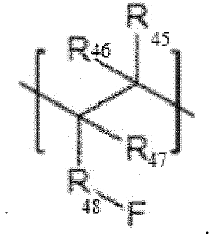

7. A preparation method of a polymer electrolyte according to claim 1, comprising:
(1) dissolving a functional polymer with an organic solvent, and uniformly mixing to obtain a system A, wherein the functional polymer has a mass ratio of 0.2%-30% in the system A;
(2) uniformly mixing the system A, a lithium salt, and a functional additive to obtain a mixed solution;
(3) subjecting the mixed solution to in-situ polymerizing to obtain the polymer electrolyte.

8. A lithium-ion battery **characterized by** comprising the polymer electrolyte of any one of claims 1-6.

## Patentansprüche

1. Polymerelektrolyt, wobei der Polymerelektrolyt mindestens eine Carbonatstruktur, eine Esterstruktur, eine Borstruktur und eine Fluorstruktur enthält; wobei die Carbonatstruktur, die Esterstruktur, die Borstruktur und die Fluorstruktur miteinander kombiniert werden können, um verschiedene Kettenabschnitte zu bilden;
vorzugsweise enthält eine Moleinheit des Polymerelektrolyten 0,8-0,95 Molteile der Carbonatstruktur und der Esterstruktur und 0,01-0,25 Molteile der Borstruktur und der Fluorstruktur;
vorzugsweise weist der Polymerelektrolyt ein Zahlenmittel des Molekulargewichts von 500-300000 auf;
wobei der Polymerelektrolyt eine Vinylcarbonatstruktur, eine Vinylesterstruktur, eine vinylhaltige borhaltige funktionelle Gruppenstruktur und eine fluorhaltige funktionelle Gruppenstruktur umfasst.

2. Der Polymerelektrolyt nach Anspruch 1, wobei der Polymerelektrolyt eine beliebige Struktur der folgenden Formel (I) oder Formel (II) aufweist: 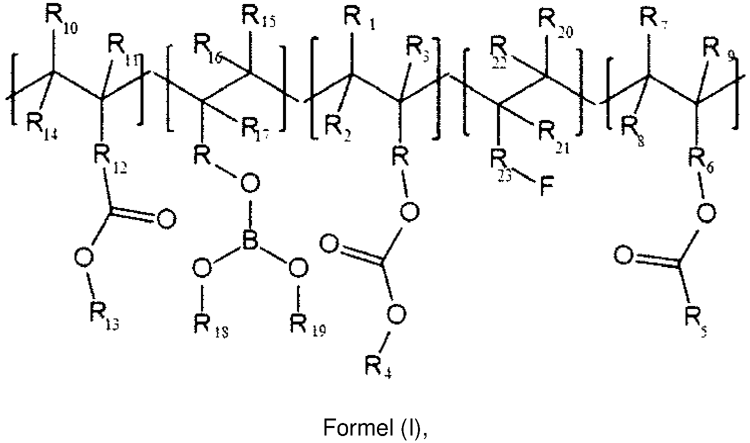 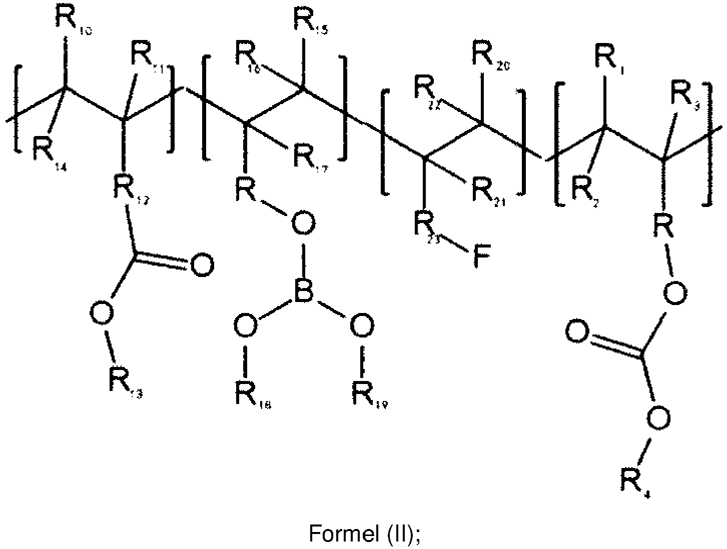 wobei R₁ bis R₂₃ jeweils eine organische funktionelle Gruppe ist.

3. Polymerelektrolyt nach Anspruch 1, wobei die Vinylcarbonatstruktur eine Formel wie folgt aufweist:

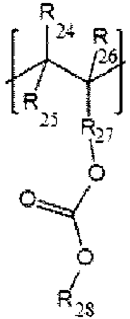

4. Polymerelektrolyt nach Anspruch 1, wobei die Vinylesterstruktur eine Formel wie folgt aufweist:

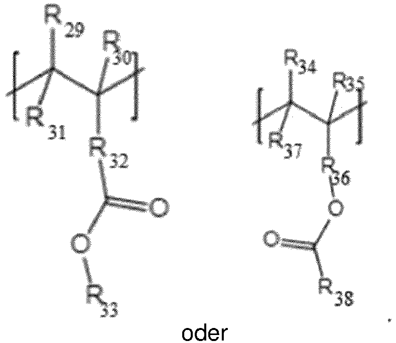

5. Polymerelektrolyt nach Anspruch 1, wobei die vinylhaltige borhaltige funktionelle Gruppenstruktur eine Strukturformel wie folgt aufweist:

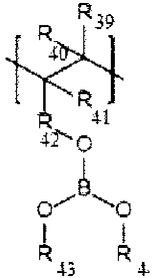

6. Polymerelektrolyt nach Anspruch 1, wobei die fluorhaltige funktionelle Gruppenstruktur eine Strukturformel wie folgt aufweist:

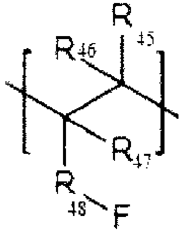

7. Herstellungsverfahren für einen Polymerelektrolyten nach Anspruch 1, umfassend:
(1) Lösen eines funktionellen Polymers mit einem organischen Lösungsmittel und gleichmäßiges Mischen, um ein System A zu erhalten, wobei das funktionelle Polymer ein Massenverhältnis von 0,2 %- 30 % im System A aufweist;
(2) einheitliches Mischen des Systems A, eines Lithiumsalzes und eines funktionellen Additivs, um eine gemischte Lösung zu erhalten;
(3) Unterziehen der gemischten Lösung einer in-situ-Polymerisation, um den Polymerelektrolyten zu erhalten.

8. Lithium-Ionen-Akku, **dadurch gekennzeichnet, dass** er den Polymerelektrolyten nach einem der Ansprüche 1-6 umfasst.

## Revendications

1. Un électrolyte polymère, dans lequel l'électrolyte polymère contient au moins une structure de carbonate, une structure d'ester, une structure de bore et une structure de fluor ; la structure de carbonate, la structure d'ester, la structure de bore et la structure de fluor peuvent être combinées les unes avec les autres pour former des sections de chaîne différentes ;
de préférence, une mole unitaire de l'électrolyte polymère contient 0,8-0,95 partie molaire de la structure carbonate et de la structure ester, et 0,01-0,25 partie molaire de la structure bore et de la structure fluor ;
de préférence, l'électrolyte polymère a un poids moléculaire moyen en nombre de 500-300000 ; dans lequel l'électrolyte polymère comprend une structure de carbonate de vinyle, une structure d'ester de vinyle, une structure de groupe fonctionnelle contenant du bore contenant du vinyle et une structure de groupe fonctionnel contenant du fluor.

2. Électrolyte polymère selon la revendication 1, dans lequel l'électrolyte polymère a l'une quelconque des structures de la formule (I) ou de la formule (II) suivante : 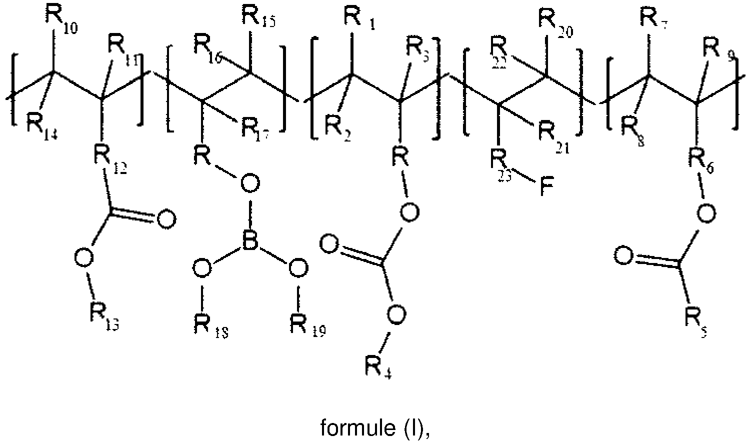 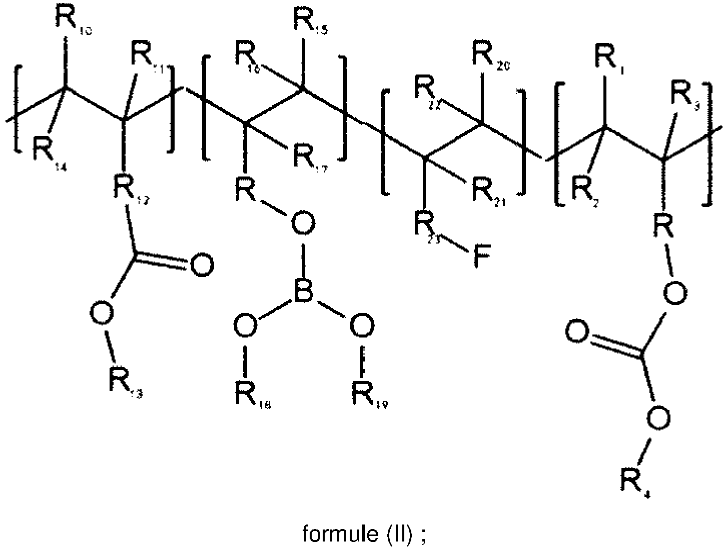 dans laquelle R₁ à R₂₃ sont chacun un groupe fonctionnel organique.

3. Électrolyte polymère selon la revendication 1, dans lequel la structure de carbonate de vinyle a la formule suivante :

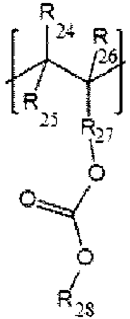

4. Électrolyte polymère selon la revendication 1, dans lequel la structure d'ester vinylique a la formule suivante :

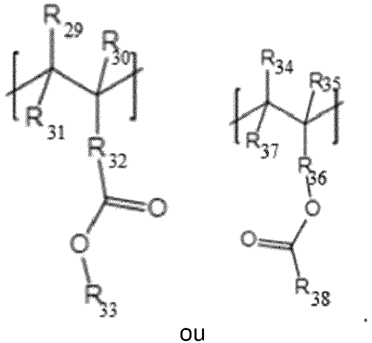

5. Électrolyte polymère selon la revendication 1, dans lequel la structure de groupe fonctionnel contenant du bore contenant du vinyle a une formule structurelle comme suit :

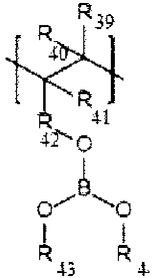

6. Électrolyte polymère selon la revendication 1, dans lequel la structure de groupe fonctionnel contenant du fluor a une formule structurelle comme suit :

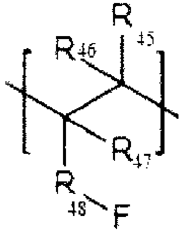

7. Procédé de préparation d'un électrolyte polymère selon la revendication 1, comprenant :
(1) dissoudre un polymère fonctionnel avec un solvant organique, et mélanger uniformément pour obtenir un système A, dans lequel le polymère fonctionnel a un rapport de masse de 0,2 % à 30 % dans le système A ;
(2) mélanger uniformément le système A, un sel de lithium et un additif fonctionnel pour obtenir une solution mélangée ;
(3) soumettre la solution mélangée à une polymérisation in situ pour obtenir l'électrolyte polymère.

8. Batterie lithium-ion **caractérisée en ce qu'**elle comprend l'électrolyte polymère selon l'une quelconque des revendications 1 à 6.
